# EUROPÄISCHE PATENTANMELDUNG

(11) **EP 4 505 903 A1**
(43) Veröffentlichungstag der Anmeldung: **12.02.2025**
(21) Anmeldenummer: 24191433.2
(22) Anmeldetag: 29.07.2024
(51) Int. Cl.: A47B 77/04, A47B 96/04, A47B 77/18, F16B 12/32

(54) **RAHMENSYSTEM ZUM EINBAU IN EIN ARBEITSMÖBEL UND ARBEITSMÖBEL**

(30) Priorität: 09.08.2023 DE 102023207640
(71) Anmelder: BLANCO GmbH + Co KG, 75038 Oberderdingen (DE)
(72) Erfinder: Tack, Tobias, 75038 Oberderdingen (DE); Hamann, Mirko, 74363 Güglingen (DE); Funke, Thomas, 75031 Eppingen (DE)
(74) Vertreter: Ullrich & Naumann PartG mbB

(57) **Zusammenfassung**

Die Erfindung betrifft ein Rahmensystem zum Einbau in ein Arbeitsmöbel, insbesondere ein Sanitärarbeitsmöbel, umfassend
ein erstes Rahmenmodul und
ein zweites Rahmenmodul, wobei
das erste und das zweite Rahmenmodul jeweils zumindest eine Einbringöffnung zum Einbringen von zumindest einer vorinstallierten Funktionskomponente für einen Nutzer aufweisen, wobei die jeweilige Einbringöffnung einen viereckigen Querschnitt aufweist, und wobei
das erste und zweite Rahmenmodul aneinander mittels einer werkzeuglosen Verbindung festlegbar sind.

## Beschreibung

Die Erfindung betrifft ein Rahmensystem zum Einbau in ein Arbeitsmöbel.

Die Erfindung betrifft weiter ein Arbeitsmöbel mit einem Rahmensystem.

Obwohl allgemein auf beliebige Arbeitsmöbel anwendbar, wird die vorliegende Erfindung in Bezug auf ein Sanitärmöbel in Form eines Küchenunterschranks erläutert.

Küchenunterschränke werden üblicherweise genutzt, um unterschiedliche Einrichtungen, beispielsweise ein Abfalltrennsystem für einen Nutzer einer Spüle als auch gegebenenfalls eine Wasseraufbereitungseinrichtung oder dergleichen, darin anzuordnen. Da häufig individuelle Randbedingungen, wie Breite, Tiefe und Höhe des Küchenunterschranks, die zudem noch durch einen Nutzer gegebenenfalls entsprechend kurzfristig geändert werden können, zu beachten sind, ist es bekannt geworden, die einzelnen Einrichtungen direkt an dem Unterschrank oder dessen beweglicher Front, beispielsweise an einer Tür, festzulegen. Die einzelnen Einrichtungen weisen dabei unterschiedlichste Abmessungen auf und werden vor Ort direkt von einem Monteur an einer für ihn passenden Position im Unterschrank festgelegt, was einen äußerst hohen Montageaufwand hinsichtlich Zeit und Komplexität bedingt.

Um zumindest die Verrohrung der Spüle von den übrigen anzuordnenden Einrichtungen teilweise zu trennen, ist es aus der DE 103 17 071 A1 bekannt geworden, hierzu im Unterschrank einen rechteckigen Installationsrahmen vorzusehen, der in dem Unterschrank festgelegt wird, umfassend miteinander verbundene, einen im Wesentlichen rechteckigen Rahmen bildende Rahmenstreben, am Rahmen befestigte, in der Rahmenebene liegende Hilfsstreben, an einer Hilfsstrebe befestigte Eckventile mit druckfesten Verbindungsschläuchen für eine Übertischauslaufarmatur und zum Anschluss an wandseitige Wasserzulaufrohre, wobei der komplette Installationshilfsrahmen in der zur dahinter liegenden Wand im Wesentlichen offenen Kammer des Unterschranks einsetzbar und am Boden und/oder den Seitenwänden des Unterschranks befestigbar ist, sowie einer den Installationsrahmen frontseitig überdeckenden Abdeckung, die lösbar am Installationsrahmen befestigt ist.

Nachteilig dabei ist die aufwendige Konstruktion und die mangelnde Flexibilität bei der Installation größerer und/oder schwererer Komponenten.

Zur Lösung des Problems ist aus der DE 10 2021 203 803 A1 ein zweiteiliges Rahmenmodul bekannt geworden, welches mittels Trennelementen innerhalb des Rahmenmoduls für Funktionskomponenten unterteilt werden kann.

Nachteilig dabei ist jedoch, dass eine Vorkonfektionierung des Rahmenmoduls mit Funktionskomponenten wie Schubladen, einer Wasseraufbereitungseinheit oder dergleichen zwar möglich ist, eine Vertragung des mit den vorinstallierten Funktionskomponenten versehenen Rahmenmoduls vor Ort auf Grund des damit verbundenen hohen Gewichts für einen Monteur beim Kunden erheblich erschwert wird. Darüber hinaus ist ein Nachteil, dass eine unterschiedliche Anordnung der Funktionskomponenten, beispielsweise je nach Wunsch des Kunden die Schublade links, die Wasseraufbereitungseinheit rechts, ohne aufwendige De- und Remontage nicht möglich ist. Ebenso ist die Breite des Rahmenmoduls nicht veränderbar, was eine Anpassung an einen Unterschrank mit anderen Maßen unmöglich macht.

Eine Aufgabe der vorliegenden Erfindung ist es daher, ein Rahmensystem und ein Arbeitsmöbel mit einem Rahmensystem zur Verfügung zu stellen, welche flexibler an unterschiedliche Abmessungen von Unterschränken anpassbar sind und gleichzeitig eine verbesserte Handhabbarkeit vor Ort beim Kunden ermöglichen.

Eine weitere Aufgabe der vorliegenden Erfindung ist es, ein alternatives Rahmensystem und ein alternatives Arbeitsmöbel mit einem Rahmensystem zur Verfügung zu stellen.

In einer Ausführungsform löst die vorliegende Erfindung die vorstehend genannten Aufgaben mit einem Rahmensystem zum Einbau in ein Arbeitsmöbel, insbesondere ein Sanitärarbeitsmöbel, umfassend ein erstes Rahmenmodul und ein zweites Rahmenmodul, wobei das erste und das zweite Rahmenmodul jeweils zumindest eine Einbringöffnung zum Einbringen von zumindest einer vorinstallierten Funktionskomponente für einen Nutzer aufweisen, wobei die jeweilige Einbringöffnung einen viereckigen Querschnitt aufweist, und wobei das erste und zweite Rahmenmodul aneinander mittels einer werkzeuglosen Verbindung festlegbar sind.

In einer Ausführungsform löst die vorliegende Erfindung die vorstehend genannten Aufgaben mit einem Arbeitsmöbel mit einem Rahmensystem gemäß einem der Ansprüche 1-14.

Der Begriff "Sanitär" ist im weitesten Sinne zu verstehen und bezieht sich, insbesondere in der Beschreibung, vorzugsweise in den Ansprüchen unter anderem auf jegliche Objekte, Anordnungen, Vorrichtungen, Einrichtungen und dergleichen im Zusammenhang mit Bädern, Küchen, Heizungen und dergleichen.

Die Formulierung "Einbau in ein Arbeitsmöbel" ist im weitesten Sinne zu verstehen und bezieht sich, insbesondere in den Ansprüchen, vorzugsweise in der Beschreibung auf jegliche Anordnung in, an, zwischen oder unter einem oder mehreren Arbeitsmöbeln. Insbesondere bezieht sich die Formulierung nicht nur auf einen Einbau des Rahmensystems in ein Arbeitsmöbel, sondern auch auf die Anordnung auf einem Boden unter einer Arbeitsplatte und zwischen zwei separaten Arbeitsmöbeln.

Die Formulierung "werkzeuglose Verbindung" ist im weitesten Sinne zu verstehen und bezieht sich, insbesondere in den Ansprüchen, vorzugsweise in der Beschreibung auf jedwede formschlüssige, stoffschlüssige und/oder kraftschlüssige Verbindung, welche händisch und/oder mittels nicht im Sinne eines Werkzeugs definierter Gegenstände hergestellt werden kann und gegebenenfalls auch wieder gelöst werden kann. Eine werkzeuglose Verbindung kann beispielsweise eine Rastverbindung sein, bei der eine Lasche in eine korrespondierende Öffnung eingreift, wenn das entsprechende Bauelement mit der Lasche an einem Bauelement mit der Öffnung händisch eingeschoben wird. Die Rastverbindung kann dann entweder händisch oder mittels eines Gegenstands, beispielsweise eines Bleistifts, durch Eindrücken oder Anheben der Lasche wieder gelöst werden. Der Bleistift stellt dabei kein Werkzeug im Sinne der vorliegenden Erfindung dar.

Einer der damit erzielten Vorteile ist, dass ein einfacheres Vertragen vor Ort, insbesondere, wenn die Funktionskomponenten vorkonfektioniert sind, durch einen Monteur ermöglicht wird. So können in den beiden Rahmenmodulen jeweils Funktionskomponenten vormontiert werden und die beiden Rahmenmodule dann einfacher vertragen werden, weil diese für sich genommen ein geringeres Gewicht aufweisen und beispielsweise erst in einem Küchenunterschrank oder dergleichen aneinander festgelegt werden. Ebenso können die Rahmenmodule flexibler an unterschiedliche Abmessungen von Unterschränken angepasst werden. So kann beispielsweise eines der Rahmenmodule immer die gleichen Abmessungen aufweisen und das andere der beiden Rahmenmodule unterschiedliche Abmessungen, um bei Anordnung der beiden Rahmenmodule unterschiedliche Abmessungen von Unterschränken berücksichtigen zu können. Da das erste Rahmenmodul immer die gleichen Abmessungen aufweist, kann dieses kostengünstig hergestellt werden, was die Kosten für das Rahmensystem insgesamt senkt.

Weitere Merkmale, Vorteile und weitere Ausführungsformen der Erfindung sind im Folgenden beschrieben oder werden dadurch offenbar.

Gemäß einer vorteilhaften Weiterbildung der Erfindung ist ein drittes Rahmenmodul an jeweils einer Seite des ersten und zweiten Rahmenmoduls festlegbar, wobei die Seiten des ersten und zweiten Rahmenmoduls eine gemeinsame Ebene bilden. Einer der damit erzielten Vorteile ist, dass zum einen die Stabilität der Rahmenmodule insgesamt erhöht wird, zum anderen wird auch die Flexibilität hinsichtlich der Anordnung von insbesondere vorinstallierten Funktionskomponenten erhöht.

Gemäß einer weiteren vorteilhaften Weiterbildung der Erfindung ist das dritte Rahmenmodul an dem ersten und/oder zweiten Rahmenmodul, insbesondere an beiden Rahmenmodulen, werkzeuglos festlegbar. Vorteil hiervon ist, dass eine einfache und schnelle Festlegung des dritten Rahmenmoduls ermöglicht wird.

Gemäß einer weiteren vorteilhaften Weiterbildung der Erfindung weist das erste Rahmenmodul und das zweite Rahmenmodul einen unterschiedlichen Querschnitt bezüglich der jeweiligen Einbringöffnung auf. Vorteil hiervon ist eine höhere Flexibilität in Bezug auf die Anordnung von insbesondere vorinstallierten Funktionskomponenten.

Gemäß einer weiteren vorteilhaften Weiterbildung der Erfindung sind das erste und zweite Rahmenmodul so ausgebildet, dass diese entlang einer vorgebbaren Richtung in beliebiger Anordnung nebeneinander anordenbar sind. Damit wird ebenfalls die Flexibilität erhöht und gleichzeitig werden die Kosten gesenkt. So ist es beispielsweise möglich, dass das erste Rahmenmodul in Frontansicht sowohl auf der linken als auch auf der rechten Seite des zweiten Rahmenmoduls angeordnet werden kann. So können das erste und/oder zweite Rahmenmodul so ausgebildet werden, dass diese derart symmetrisch, beispielsweise bei einer Drehung um 180 Grad um eine Hochachse, auf der jeweils anderen Seite des jeweiligen anderen Moduls angeordnet werden können.

Gemäß einer weiteren vorteilhaften Weiterbildung der Erfindung ist ein viertes Rahmenmodul als Sockelmodul angeordnet, wobei das Sockelmodul an jeweils einer Seite des ersten und zweiten Rahmenmoduls festlegbar ist, wobei die Seiten des ersten und zweiten Rahmenmoduls eine gemeinsame Ebene bilden, insbesondere wobei das Sockelmodul auf der gegenüberliegenden Seite des dritten Rahmenmoduls an dem ersten und zweiten Rahmenmodul anordenbar ist. Vorteil eines Sockelmoduls ist, dass kein Sockel an dem Arbeitsmöbel angeordnet werden muss, sondern das erste, zweite und/oder dritte Rahmenmodul mittels des Sockelmoduls auch freistehend unterhalb einer Arbeitsplatte oder dergleichen angeordnet werden kann.

Gemäß einer weiteren vorteilhaften Weiterbildung der Erfindung weist das Sockelmodul eine Höheneinstelleinrichtung zur Höhen- und/oder Niveauregulierung und/oder eine Abstandseinstelleinrichtung zur Einstellung eines Abstands zu einem umgebenden Element, insbesondere einer Wand, auf. Vorteil hiervon ist, dass die Flexibilität bei der Anpassung des Rahmensystems an örtliche Gegebenheiten wie Unebenheiten in der Stellfläche oder einer Wand erhöht werden kann, da diese ausgeglichen werden können und trotzdem eine zuverlässige Anordnung ermöglicht wird.

Gemäß einer weiteren vorteilhaften Weiterbildung der Erfindung ist die werkzeuglose Verbindung in Form einer Steckverbindung und/oder in Form einer insbesondere lösbaren Klips- und/oder Rastverbindung bereitgestellt. Vorteil hiervon ist eine einfache und kostengünstige Bereitstellung einer werkzeuglosen, insbesondere lösbaren, Verbindung.

Gemäß einer weiteren vorteilhaften Weiterbildung der Erfindung ist zumindest eine Blendleiste an zumindest einem der Rahmenmodule anordenbar. Vorteil hiervon ist, dass die Anpassbarkeit an unterschiedliche Arbeitsmöbel bei gleichzeitig hoher optischer Anmutung erhöht wird.

Gemäß einer weiteren vorteilhaften Weiterbildung der Erfindung ist die zumindest eine Blendleiste lösbar oder unlösbar, insbesondere mittels einer Klebeverbindung, mit dem zumindest einen Rahmenmodul verbindbar. Vorteil einer lösbaren Verbindung ist, dass im Wartungsfall das Rahmensystem gegebenenfalls demontierbar ist. Vorteil einer unlösbaren Verbindung ist, dass eine besonders einfache und kostengünstige Verbindung zur Verfügung gestellt wird.

Gemäß einer weiteren vorteilhaften Weiterbildung der Erfindung sind ein oder mehrere Fixierelemente zur Festlegung der Rahmenmodule aneinander und/oder zur Festlegung zumindest einer Blendleiste an zumindest einem der Rahmenmodule angeordnet. Vorteil hiervon ist, dass die Zuverlässigkeit der Festlegung der Rahmenmodule aneinander verbessert werden kann.

Gemäß einer weiteren vorteilhaften Weiterbildung der Erfindung weist das dritte Rahmenmodul einen U-förmigen Querschnitt auf, umfassend eine Basis und zwei seitliche Schenkel, wobei das dritte Rahmenmodul mit seiner Basis an dem ersten und zweiten Rahmenmodul festlegbar ist. Vorteil hiervon ist, dass auf einfache Weise eine Funktionskomponente in dem dritten Rahmenmodul anordenbar ist.

Gemäß einer weiteren vorteilhaften Weiterbildung der Erfindung weist das dritte Rahmenmodul an den beiden seitlichen Schenkeln eine insbesondere rechteckförmige Aussparung auf. Vorteil hiervon ist zum einen eine vereinfachte Handhabung des dritten Rahmenmoduls, zum anderen sind in den Aussparungen Funktionskomponenten auf einfache Weise festlegbar.

Gemäß einer weiteren vorteilhaften Weiterbildung der Erfindung ist zumindest ein Schubladenelement und/oder ein Abfalltrennelement und/oder eine Wasseraufbereitungseinheit in einem oder mehreren der Rahmenmodule anordenbar. Vorteil hiervon ist eine flexible Anpassung der Ausstattung von Rahmenmodulen mit Funktionskomponenten an unterschiedliche Vorgaben von Kunden.

Gemäß einer weiteren vorteilhaften Weiterbildung der Erfindung ist das Sockelmodul mittels einer lösbaren Verbindung, insbesondere einer Schraub- und/oder Rastverbindung, und/oder einer unlösbaren Verbindung, insbesondere einer Klebeverbindung, mit dem ersten und zweiten Rahmenmodul verbindbar. Vorteil hiervon ist eine einfache Montage und Demontage im Wartungsfall.

Gemäß einer weiteren vorteilhaften Weiterbildung der Erfindung weist das dritte Rahmenmodul eine Kante, insbesondere eine Aufkantung auf, welche senkrecht zur gemeinsamen Ebene orientiert ist, insbesondere wobei diese entgegengesetzt zu einem Falz des ersten und/oder zweiten Rahmenmoduls im Bereich der Anlage des dritten Rahmenmoduls an dem ersten und zweiten Rahmenmodul angeordnet ist. Vorteil hiervon ist, dass das eine zuverlässige Anordnung von Funktionskomponenten im dritten Rahmenmodul ermöglicht wird.

Gemäß einer weiteren vorteilhaften Weiterbildung der Erfindung ist die Steckverbindung in Form eines U-förmig ausgebildeten Falzes an einem der beiden Rahmenmodule, erstes und zweites Rahmenmodul, bereitstellbar, der über eine Kante des anderen der beiden Rahmenmodule aufschiebbar ist. Vorteil hiervon ist eine einfache Montage bei gleichzeitig zuverlässiger Festlegung der Rahmenmodule aneinander.

Gemäß einer weiteren vorteilhaften Weiterbildung der Erfindung weist das dritte Rahmenmodul einen U-förmig ausgebildeten Falz auf, der über eine Kante von erstem und/ zweitem Rahmenmodul aufschiebbar ist. Vorteil hiervon ist eine einfache Montage bei gleichzeitig zuverlässiger Festlegung des dritten Rahmenmoduls an erstem und zweitem Rahmenmodul.

Gemäß einer weiteren vorteilhaften Weiterbildung der Erfindung ist ein Ausgleichsmodul und/oder ein Ablagemodul an dem Arbeitsmöbel und/oder dem Rahmensystem festlegbar. Vorteil hiervon ist, dass die Flexibilität der Anpassbarkeit an unterschiedliche Abmessungen von Arbeitsmöbeln beziehungsweise der Funktionskomponenten erhöht wird.

Weitere wichtige Merkmale und Vorteile der Erfindung ergeben sich aus den Unteransprüchen, aus den Zeichnungen und aus der dazugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt in schematischer Form
- Figur 1: ein Rahmensystem gemäß einer Ausführungsform der vorliegenden Erfindung;
- Figur 2: ein Arbeitsmöbel gemäß einer Ausführungsform der vorliegenden Erfindung;
- Figur 3: ein Rahmensystem gemäß einer Ausführungsform der vorliegenden Erfindung;
- Figur 4: einen Querschnitt im Bereich der Anlage eines dritten an einem ersten Rahmenmodul eines Rahmensystems gemäß einer Ausführungsform der vorliegenden Erfindung; und
- Figur 5: einen Querschnitt im Bereich der Anlage eines dritten an einem ersten Rahmenmodul eines Rahmensystems gemäß einer Ausführungsform der vorliegenden Erfindung.

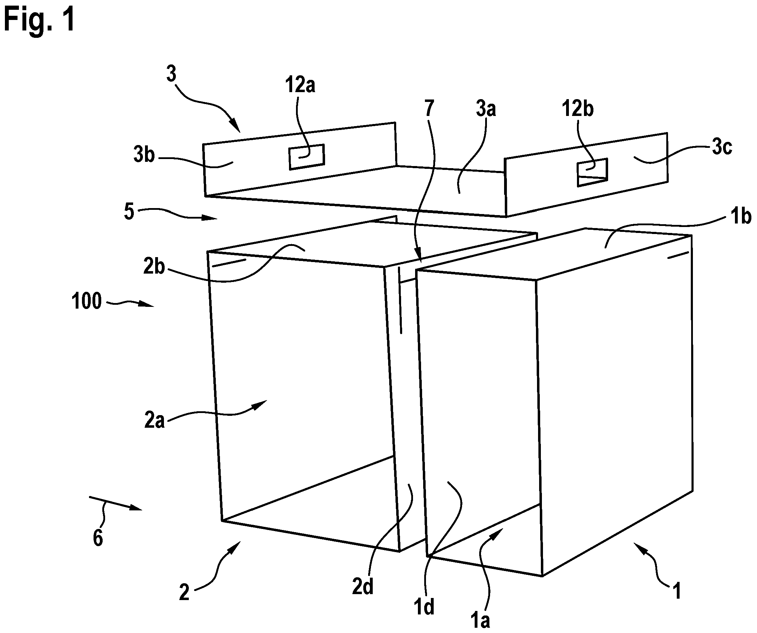

Figur 1 zeigt ein Rahmensystem gemäß einer Ausführungsform der vorliegenden Erfindung.

In Figur 1 ist ein Rahmensystem 100 gezeigt, welches zwei im Querschnitt rechteckförmige Rahmenmodule 1, 2 umfasst. Die Rahmenmodule 1, 2 weisen jeweils eine Einbringöffnung 1a, 2a auf. Auf der der Einbringöffnung 1a, 2a abgewandten Seite des Rahmenmoduls 1, 2 ist ebenfalls eine Öffnung, hier in gleicher Größe und nicht mit Bezugszeichen versehen, angeordnet. Die beiden Rahmenmodule 1, 2 sind aneinander mittels einer werkzeuglosen Verbindung, hier einer Steckverbindung 7, festlegbar. Das erste Rahmenmodul 1 ist dabei mit seiner linken Seitenfläche 1d an der rechten Seitenfläche 2d des zweiten Rahmenmoduls 2 festlegbar. Auf der Oberseite 1b, 2b der beiden Rahmenmodule 1, 2, die eine gemeinsame Ebene 5 bilden, ist ein drittes Rahmenmodul 3 angeordnet, welches im Querschnitt eine U-Form aufweist mit einer Basis 3a, die an den Oberseiten 1b, 2b der Rahmenmodule 1, 2 anliegt und lösbar mit den Rahmenmodulen 1, 2 verbunden ist und mit zwei Schenkeln 3b, 3c, die senkrecht nach oben aus der Ebene 5 hervorragen. Die Schenkel 3b, 3c weisen jeweils eine seitliche Aussparung 12a, 12b auf, welche rechteckförmig ausgebildet ist. Das dritte Rahmenmodul 3 ist dabei so ausgebildet, dass dieses sich entlang der Richtung 6 über die gesamte Breite der beiden Rahmenmodule 1, 2 erstreckt. Die Tiefe des dritten Rahmenmoduls 3 ist geringer als die Tiefe der beiden Rahmenmodule 1, 2.

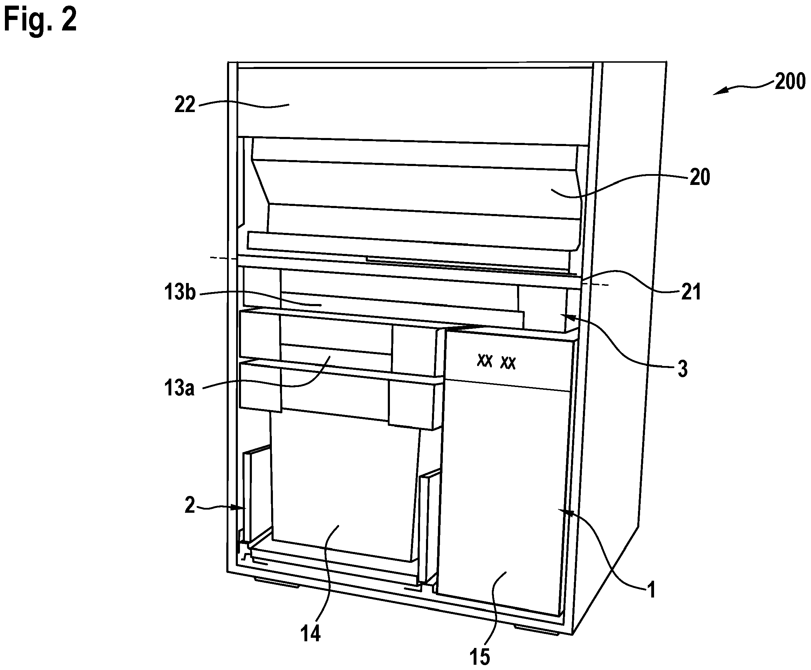

Figur 2 zeigt ein Arbeitsmöbel gemäß einer Ausführungsform der vorliegenden Erfindung.

In Figur 2 ist ein Arbeitsmöbel 200 gezeigt, welches im Wesentlichen kastenförmig ausgebildet ist. Im unteren Bereich des Arbeitsmöbels 200 ist auf der rechten Seite ein erstes Rahmenmodul 1 und links davon ein zweites Rahmenmodul 2 angeordnet. Beide Rahmenmodule 1, 2 sind auf einem Boden des Arbeitsmöbels 200 angeordnet und gegebenenfalls an diesem festgelegt. Ebenso sind die beiden Rahmenmodule 1, 2 aneinander werkzeuglos festgelegt. In dem ersten Rahmenmodul 1 ist eine Wasseraufbereitungseinheit 15 angeordnet, in dem zweiten Rahmenmodul 2 im unteren Bereich ein ausziehbar angeordneter Abfalleimer 14 und darüber ein Schubladenelement 13a. Oberhalb der beiden Rahmenmodule 1, 2 ist ein drittes Rahmenmodul 3 angeordnet, welches ein weiteres Schubladenelement 13b aufweist, welches sich über die gesamte Breite des Arbeitsmöbels 200 erstreckt.

Auf Grund der Höhe des Arbeitsmöbels 200 ist nun oberhalb des dritten Rahmenmoduls 3, welches an den beiden anderen Rahmenmodulen 1, 2 lösbar festgelegt ist, an dem Arbeitsmöbel 200 eine Blende 21 angeordnet. Oberhalb der Blende 21 ist wiederum am Arbeitsmöbel 200 direkt eine Organisationsablage 20 angeordnet, die sich unterhalb einer Quertraverse 22 des Arbeitsmöbels 200 befindet. Auf diese Weise können Zwischenräume zwischen den Modulen ab- oder überdeckt werden, sodass ein hochwertiger optischer Gesamteindruck erhalten bleibt.

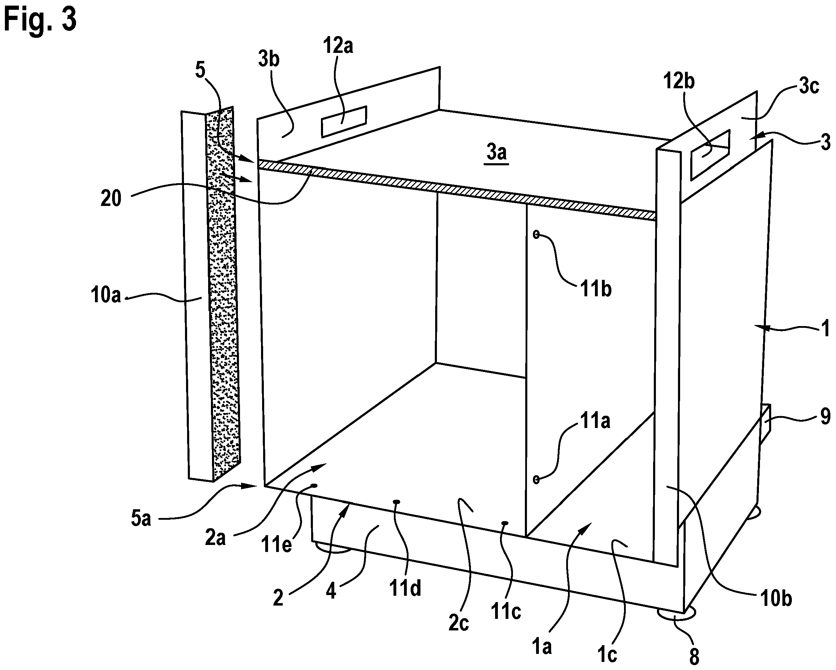

Figur 3 zeigt ein Rahmensystem gemäß einer Ausführungsform der vorliegenden Erfindung.

In Figur 3 ist im Wesentlichen ein Rahmensystem 100 gemäß Figur 1 gezeigt. Im Unterschied zum Rahmensystem 100 gemäß Figur 1 ist beim Rahmensystem 100 gemäß Figur 3 nun ein viertes Rahmenmodul 4 in Form eines Sockelmoduls gezeigt. Hierbei sind die beiden Rahmenmodule 1, 2 mit ihrer jeweiligen Unterseite 1c, 2c, die eine gemeinsame Ebene 5a bilden, mit der Oberseite des Sockelmoduls 4, insbesondere lösbar mittels Schrauben 11c, 11d, 11e, verbunden. Die beiden Rahmenmodule 1, 2 sind mittels zusätzlicher Fixierelemente, hier in Form von Schrauben 11a, 11b aneinander lösbar festgelegt. Weiterhin sind an der rechten Seitenfläche 2d und an der linken Seitenfläche 1d des ersten und zweiten Rahmenmoduls 1, 2 sowie an den zu den Seitenflächen 1d, 2d korrespondierenden Außenflächen des dritten Rahmenmoduls 3 L-förmige Blendleisten 10a, 10b mittels einer Klebeverbindung angeordnet. Diese dienen zum Ausgleich beziehungsweise Abdecken von Zwischenräumen zwischen dem Rahmenmodul 1, 2 und einem Arbeitsmöbel 200. Das Sockelmodul 4 weist weiter in der Höhe verstellbare Füße 8 und in der Tiefe einstellbare Abstandshalter 9 im hinteren Bereich auf.

Der in den Figuren gezeigte modulare Aufbau des Rahmensystems 100 umfasst eine Ausführungsform mit einem Rahmensystem mit Sockelmodul 4, einem ersten und zweiten Rahmenmodul 1, 2 als gemeinsames Basismodul, einem Blendenmodul 21, einem Schubladenmodul 3 als drittes Rahmenmodul und einem Organisationsmodul 20. Die Module 4, 1, 2, 3, 21, 20 sind in vertikaler Richtung aufeinandergesetzt und verbunden. Das Sockelmodul 4 wird bei der Montage, beispielsweise in einen Küchenunterschrank, nicht benötigt. Das Blendenmodul 21 und das Schubladenmodul 3 sind so ausgestaltet, dass diese je nach Planungswunsch entsprechend angeordnet werden können oder dass das Schubladenmodul 3 zumindest teilweise unter dem Blendenmodul 21 verbaut wird. Das Organisationsmodul 20 bildet den Abschluss nach oben. Die Höhe des Blendenmoduls 21 sowie des Schubladenmoduls 3 kann so ausgebildet werden, dass durch die Kombination der beiden Module 3, 21 beziehungsweise durch das Weglassen eines der Module 3, 21, in Kombination mit dem Verschiebeweg des Organisationsmoduls 20 in senkrechter Richtung, eine größtmögliche Passgenauigkeit in Bezug auf die Varianz der Korpushöhen von Unterschränken von Arbeitsmöbeln 200 bereitgestellt werden können. Die hier dargestellte modulare Anordnung in horizontaler Richtung ist für den 60 cm breiten Küchenunterschrank ausgelegt und kann im Sinne der vorliegenden Erfindung sowohl für schmalere als auch breitere Küchenunterschränke in der horizontalen Erstreckung angepasst werden.

Das Basismodul ist in Abhängigkeit der Schrankbreite in mindestens zwei Untermodule - erstes und zweites Rahmenmodul 1, 2 - aufgeteilt. Die Aufteilung kann zumindest in vertikaler Richtung erfolgen. Das Basismodul 1, 2 beziehungsweise die darüber liegenden Module 3, 20, 21 können in horizontaler Richtung symmetrisch als auch asymmetrisch ausgebildet sein. Die Rahmenmodule 1, 2 sind so ausgebildet, dass diese jeweils die rechte und linke Variante des Rahmenmoduls 1,2 abbilden können. Hierfür wird das jeweilige Modul 1, 2 um 180 Grad um eine senkrechte Achse gedreht und dann miteinander verbunden. Die Verbindung der Module 1, 2, welche lösbar oder nicht lösbar ausgebildet sein kann, kann im Zuge der Fertigung erfolgen oder mittels spezieller Blechverbindungen erst bei der Montage beim Kunden vor Ort erfolgen. Als Verbindungselemente der Module können Schraubverbindungen, Einpresselemente, etc. verwendet werden.

Eines der beiden Rahmenmodule 1, 2 kann zum Beispiel eine Wasseraufbereitungseinheit 15 umfassen. Hierbei kann die Wasseraufbereitungseinheit 15 direkt in das jeweilige Rahmenmodul 1, 2 verbaut werden und nicht nur in das Rahmenmodul 1, 2 eingeschoben werden. Somit stellt die Außenhülle des jeweiligen Rahmenmoduls 1,2 auch die Außenhülle der Wasseraufbereitungseinheit 15 dar. Die Wasseraufbereitungseinheit 15 kann auf eine Trägereinheit (nicht gezeigt) montiert und dann im Zuge der Montage in das jeweilige Rahmenmodul 1, 2 eingesetzt werden. Kabel und Verbindungsleitungen werden durch eine rückseitige und/oder vorderseitige Blende des Wasseraufbereitungsmoduls 15 geführt beziehungsweise an diese angeschlossen.

Die auf die beiden Rahmenmodule 1, 2 aufgesetzten Module können dabei eine geringere Tiefe aufweisen, um Kollisionen mit einem Spülbecken beziehungsweise einer Ablaufverrohrung zu vermeiden. Das Blendenmodul 21 ist in einer Ausführungsform so ausgebildet, dass es durch die Geometrie und/oder Querschnitt zur Versteifung des gesamten Rahmensystems 100 bezüglich Durchbiegung und/oder Torsion beiträgt. Das Blendenmodul 21 kann sich über die gesamte Breite, definiert durch die Ebene 5 der Einbringöffnungen 1a, 2a, des Rahmensystems 100 erstrecken. Des Weiteren kann dieses so ausgebildet sein, dass es in der Frontalansicht einen rechteckförmigen Rahmen mit eingesetzter Blende aufweist. Dies kann den Vorteil haben, dass ein Zugriff in das Blendenmodul 21 möglich ist. Durch diese Möglichkeit zur Öffnung ist es wiederum möglich, in dem Blendenmodul 21 technische Geräte oder Funktionselemente anzuordnen. Diese können beispielsweise Schlauchführungen/ Schlauchwickler für Armaturen mit Auszugsbrause oder Wasserverteilmodule umfassen.

Für die Ausführungsformen mit einem Sockelmodul 4 wird beispielsweise kein Küchenunterschrank benötigt. Das Sockelmodul 4 kann als separates Bauteil mit dem Rahmensystem 100 mitgeliefert werden. Die Montagereihenfolge verändert sich dahingehend, dass zuerst das Sockelmodul 4 zwischen bestehenden Küchenunterschränken angeordnet wird und mittels Nivelierschrauben 11c, 11d, 11e ausgerichtet wird. Die Beabstandung zur Wand beziehungsweise den benachbarten Schränken kann in einer Ausführungsform mittels schraubenähnlichen Elementen 9 erfolgen. In einer weiteren Ausführungsform kann die Beabstandung auch mittels an das Sockelmodul angeformter Blechelemente erfolgen.

Um eine optisch ansprechende Frontansicht einer Küchenzeile bereitzustellen, können an dem Rahmensystem 100, welches zumindest die Rahmenmodule 1, 2 und zumindest das dritte Rahmenelement 3 umfasst und welches fertig montiert angeliefert wird, seitlich Blendleisten 10a, 10b angeordnet werden. Diese Blendleisten 10a, 10b können aus dem gleichen Material wie das der benachbarten Korpusse hergestellt sein und können zum Beispiel aus vorgefertigten Passleisten direkt vor Ort zugeschnitten werden.

In einer Ausführungsform können zur erleichterten Positionierung der Passleisten je Seite zwei doppelseitige Klebebänder vorgesehen werden. Die Fixierung der Seitenblenden 10a, 10b erfolgt mittels Schraubverbindung durch vorgesehene Bohrungen im Rahmensystem 100. In einer Ausführungsform können die seitlichen Passleisten mittels Klips-, Steck- und oder Rastverbindungen aufgesteckt werden.

Ebenso denkbar ist, die Passleisten durch Frontblenden zu ersetzen. Diese werden nicht seitlich an dem Rahmensystem 100 angeordnet, sondern mittels Steckverbinder frontal auf das Rahmensystem 100 aufgesteckt.

In einer weiteren Ausführungsform können die genannten Frontblenden mittels Winkelstücken seitlich an dem Rahmensystem 100 angeordnet werden. Dies kann den Vorteil aufweisen, dass die Funktionskomponenten des Rahmenelements 100 nicht von den Frontblenden verdeckt werden.

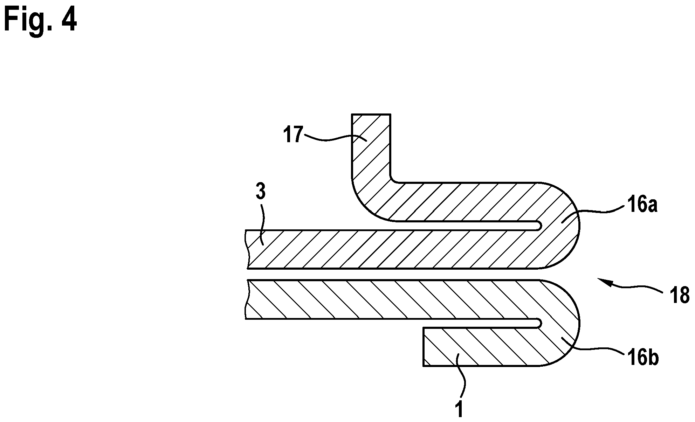

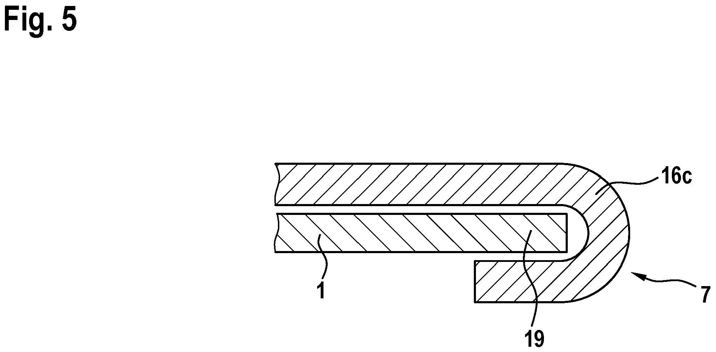

Die Figuren 4 und 5 zeigen jeweils einen Querschnitt im Bereich der Anlage eines dritten an einem ersten Rahmenmodul eines Rahmensystems gemäß einer Ausführungsform der vorliegenden Erfindung.

In Figur 4 ist ein Querschnitt parallel zu einer Seitenwand eines Rahmenmoduls 1, 2 dargestellt, genauer der Anlagebereich 18, an dem das dritte Rahmenmodul 3 an dem ersten und zweiten Rahmenmodul 1, 2 anliegt. In Figur 4 ist das Rahmenmodul mit dem Bezugszeichen 1 bezeichnet, jedoch kann dies alternativ oder zusätzlich auch entsprechend für das zweite Rahmenmodul 2 gelten. Das erste Rahmenmodul 1 weist dabei einen nach innen umgebogenen Falz, also in Einbringrichtung in die Einbringöffnung 1a des Rahmenmoduls 1, auf. Das dritte Rahmenmodul 3 weist einen entsprechend spiegelsymmetrisch zur Oberseite 1b des ersten Rahmelements 1 verlaufenden Falz 16a auf, der in dem der Einbringöffnung 1a abgewandten Bereich eine senkrechte Aufkantung 17 aufweist.

In Figur 5 weist das erste Rahmenmodul 1 nun keinen Falz mehr auf. Das dritte Rahmenmodul 3 weist jedoch einen nach unten in Richtung der Einbringöffnung 1a gebogenen Falz 16c auf, der so ausgebildet ist, dass dieser eine gerade Kante 19 des ersten Rahmenmoduls 1 teilweise umfasst oder umgreift. Auf diese Weise kann das dritte Rahmenmodul 3 an dem ersten Rahmenmodul 1 mittels einer Steckverbindung festgelegt werden. Entsprechendes kann auch für eine Verbindung zwischen erstem und zweitem Rahmenmodul 1, 2 vorgesehen sein.

Zusammenfassend kann zumindest eine Ausführungsform der vorliegenden Erfindung zumindest einen der folgenden Vorteile und/oder eines der folgenden Merkmale bereitstellen:
- Flexible Anpassung an unterschiedliche Küchenmöbel.
- Einfache, kostengünstige Herstellung.
- Einfache, schnelle und flexible Montage von Rahmenmodulen.
- Optimierter Bauraum für Module.
- Zuverlässige Festlegung der Rahmenmodule aneinander.
- Zuverlässige Festlegung des Rahmensystems in einem Arbeitsmöbel.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: Erstes Rahmenmodul
- 1a: Einbringöffnung
- 1b: Oberseite
- 1c: Unterseite
- 1d: Seitenfläche
- 2: Zweites Rahmenmodul
- 2a: Einbringöffnung
- 2b: Oberseite
- 2c: Unterseite
- 2d: Seitenfläche
- 3: Drittes Rahmenmodul
- 3a: Basis
- 3b, 3c: Schenkel
- 4: Viertes Rahmenmodul
- 5, 5a: Ebene
- 6: Richtung
- 7: Werkzeuglose Verbindung
- 8: Fuß
- 9: Abstandshalter
- 10a, 10b: Blendleiste
- 11a, 11b, 11c, 11d, 11e: Schraube
- 12a, 12b: Seitliche Aussparung Schenkel
- 13a, 13b: Schubladenelement
- 14: Abfalleimer
- 15: Wasseraufbereitungseinheit
- 16a, 16b, 16c: Falz
- 17: Aufkantung
- 18: Anlagebereich
- 19: Kante
- 20: Organisationsablage
- 21: Blende
- 22: Quertraverse
- 100: Rahmensystem
- 200: Arbeitsmöbel

## Patentansprüche

1. Rahmensystem (100) zum Einbau in ein Arbeitsmöbel (200), insbesondere ein Sanitärarbeitsmöbel, umfassend
ein erstes Rahmenmodul (1) und
ein zweites Rahmenmodul (2), wobei
das erste und das zweite Rahmenmodul (1, 2) jeweils zumindest eine Einbringöffnung (1a, 2a) zum Einbringen von zumindest einer vorinstallierten Funktionskomponente für einen Nutzer aufweisen, wobei die jeweilige Einbringöffnung (1a, 2a) einen viereckigen Querschnitt aufweist, und wobei
das erste und zweite Rahmenmodul (1, 2) aneinander mittels einer werkzeuglosen Verbindung (7) festlegbar sind, vorzugsweise wobei ein drittes Rahmenmodul (3) an jeweils einer Seite (1b, 2b) des ersten und zweiten Rahmenmoduls (1, 2) festlegbar ist, wobei die Seiten (1b, 2b) des ersten und zweiten Rahmenmoduls (1, 2) eine gemeinsame Ebene (5) bilden.

2. Rahmensystem (100) gemäß Anspruch 1, **dadurch gekennzeichnet, dass** das dritte Rahmenmodul (3) an dem ersten und/oder zweiten Rahmenmodul (1, 2), insbesondere an beiden Rahmenmodulen (1, 2), werkzeuglos festlegbar ist.

3. Rahmensystem (100) gemäß einem der Ansprüche 1-2, **dadurch gekennzeichnet, dass** das erste Rahmenmodul (1) und das zweite Rahmenmodul (2) einen unterschiedlichen Querschnitt bezüglich der jeweiligen Einbringöffnung (1a, 2a) aufweisen.

4. Rahmensystem (100) gemäß einem der Ansprüche 1-3, **dadurch gekennzeichnet, dass** das erste und zweite Rahmenmodul (1, 2) so ausgebildet sind, dass diese entlang einer vorgebbaren Richtung (6) in beliebiger Anordnung nebeneinander anordenbar sind.

5. Rahmensystem (100) gemäß einem der Ansprüche 1-4, **dadurch gekennzeichnet, dass** ein viertes Rahmenmodul (4) als Sockelmodul angeordnet ist, wobei das Sockelmodul (4) an jeweils einer Seite (1c, 2c) des ersten und zweiten Rahmenmoduls (1, 2) festlegbar ist, wobei die Seiten (1c, 2c) des ersten und zweiten Rahmenmoduls (1, 2) eine gemeinsame Ebene (5a) bilden, insbesondere wobei das Sockelmodul (4) auf der gegenüberliegenden Seite des dritten Rahmenmoduls (3) an dem ersten und zweiten Rahmenmodul (1, 2) anordenbar ist, vorzugsweise wobei das Sockelmodul (4) eine Höheneinstelleinrichtung (8) zur Höhen- und/oder Niveauregulierung und/oder eine Abstandseinstelleinrichtung (9) zur Einstellung eines Abstands zu einem umgebenden Element, insbesondere einer Wand, aufweist.

6. Rahmensystem (100) gemäß einem der Ansprüche 1-5, **dadurch gekennzeichnet, dass** die werkzeuglose Verbindung (7) in Form einer Steckverbindung und/oder in Form einer insbesondere lösbaren Klips- und/oder Rastverbindung bereitgestellt ist.

7. Rahmensystem (100) gemäß einem der Ansprüche 1-6, **dadurch gekennzeichnet, dass** zumindest eine Blendleiste (10a, 10b) an zumindest einem der Rahmenmodule (1, 2, 3, 4) anordenbar ist, vorzugsweise wobei die zumindest eine Blendleiste (10a, 10b) lösbar oder unlösbar, insbesondere mittels einer Klebeverbindung, mit dem zumindest einen Rahmenmodul (1, 2) verbindbar ist.

8. Rahmensystem (100) gemäß einem der Ansprüche 1-7, **dadurch gekennzeichnet, dass** ein oder mehrere Fixierelemente (11a, 11b) zur Festlegung der Rahmenmodule (1, 2, 3, 4) aneinander und/oder zur Festlegung zumindest einer Blendleiste (10a, 10b) an zumindest einem der Rahmenmodule (1, 2, 3, 4) angeordnet sind.

9. Rahmensystem (100) gemäß zumindest Anspruch 1, **dadurch gekennzeichnet, dass** das dritte Rahmenmodul (3) einen U-förmigen Querschnitt aufweist, umfassend eine Basis (3a) und zwei seitliche Schenkel (3b, 3c), wobei das dritte Rahmenmodul (3) mit seiner Basis (3a) an dem ersten und zweiten Rahmenmodul (1, 2) festlegbar ist, vorzugsweise wobei das dritte Rahmenmodul (3) an den beiden seitlichen Schenkeln (3b, 3c) eine insbesondere rechteckförmige Aussparung (12a, 12b) aufweist.

10. Rahmensystem (100) gemäß einem der Ansprüche 1-9, **dadurch gekennzeichnet, dass** zumindest ein Schubladenelement (13a, 13b) und/oder ein Abfalltrennelement (14) und/oder eine Wasseraufbereitungseinheit (15) in einem oder mehreren der Rahmenmodule (1, 2, 3, 4) anordenbar ist.

11. Rahmensystem (100) gemäß zumindest Anspruch 5, **dadurch gekennzeichnet, dass** das Sockelmodul (4) mittels einer lösbaren Verbindung (11c, 11d, 11e), insbesondere einer Schraub- und/oder Rastverbindung und/oder einer unlösbaren Verbindung, insbesondere einer Klebeverbindung, mit dem ersten und zweiten Rahmenmodul (1, 2) verbindbar ist.

12. Rahmensystem (100) gemäß zumindest Anspruch 1, **dadurch gekennzeichnet, dass** das dritte Rahmenmodul (3) eine Kante (19), insbesondere eine Aufkantung (17) aufweist, welche senkrecht zur gemeinsamen Ebene (5) orientiert ist, insbesondere wobei diese entgegengesetzt zu einem Falz (16b) des ersten und/oder zweiten Rahmenmoduls (1, 2) im Bereich (18) der Anlage des dritten Rahmenmoduls (3) an dem ersten und zweiten Rahmenmodul (1, 2) angeordnet ist.

13. Rahmensystem (100) gemäß Anspruch 6, **dadurch gekennzeichnet, dass** die Steckverbindung (7) in Form eines U-förmig ausgebildeten Falzes an einem der beiden Rahmenmodule (1, 2), erstes und zweites Rahmenmodul, bereitstellbar ist, der über eine Kante des anderen der beiden Rahmenmodule (1, 2) aufschiebbar ist.

14. Rahmensystem (100) gemäß zumindest Anspruch 2, **dadurch gekennzeichnet, dass** das dritte Rahmenmodul (3) einen U-förmig ausgebildeten Falz (16c) aufweist, der über eine Kante (19) von erstem und/ zweitem Rahmenmodul (1, 2) aufschiebbar ist.

15. Arbeitsmöbel (200) mit einem Rahmensystem (100) gemäß einem der Ansprüche 1-14, vorzugsweise wobei ein Ausgleichsmodul (21) und/oder ein Ablagemodul (20) an dem Arbeitsmöbel (200) und/oder dem Rahmensystem (100) festlegbar ist.
